(19) Europäisches Patentamt
European Patent Office
Office européen des brevets

(11) **EP 3 945 244 B1**

(12) **EUROPEAN PATENT SPECIFICATION**

(45) Date of publication and mention
of the grant of the patent:
**02.10.2024 Bulletin 2024/40**

(21) Application number: **20187862.6**

(22) Date of filing: **27.07.2020**

(51) International Patent Classification (IPC):
**F23N 5/10** *(2006.01)* **F23R 3/44** *(2006.01)*

(52) Cooperative Patent Classification (CPC):
**F23N 5/102; F02C 9/28; F23R 3/06; F23R 3/44;
G01M 15/14;** F01D 25/285; F05D 2270/303;
F23N 2241/20; F23R 2900/03341

(54) **METHOD FOR MANUFACTURING A CONTROLLER AND COMBUSTION SYSTEM**

VERFAHREN ZUR HERSTELLUNG EINER STEUERUNG UND VERBRENNUNGSSYSTEM

PROCÉDÉ DE FABRICATION D'UN CONTRÔLEUR ET SYSTÈME DE COMBUSTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.02.2022 Bulletin 2022/05**

(73) Proprietor: **Ansaldo Energia Switzerland AG
5400 Baden (CH)**

(72) Inventors:
• **SINGLA, Ghislain
3013 BERN (CH)**

• **AYBAY, Orhan
5430 WETTINGEN (CH)**
• **GRANET, Victor
5430 WETTINGEN (CH)**

(74) Representative: **Studio Torta S.p.A. et al
Corso Magenta, 56
20123 Milano (IT)**

(56) References cited:
**EP-A1- 0 646 704      EP-A1- 3 061 944
US-A1- 2006 096 292**

**Description**

TECHNICAL FIELD

The present invention relates to a method for manufacturing a controller and to a combustion system.

The controller is for calculating the temperature of a hot gas stream passing through the combustion system, which is in turn part of a gas turbine. The temperature calculated by the controller can then be advantageously used for driving the gas turbine.

BACKGROUND

Gas turbines are known which comprise a compressor where air is compressed and supplied into a first combustor, where fuel is supplied and combusted generating a hot gas stream. The hot gas stream is supplied to a high-pressure turbine, where it is partially expanded, and is then directed to a second combustor, where additional fuel is supplied and combusted with an oxidizer still present in the hot gas stream. The hot gas stream emerging from the second combustor is then expanded in a low-pressure turbine and is then released into the atmosphere.

These gas turbines can have combustors with annular combustion chambers, such that the hot gas flow is shuffled when passing through the high-pressure turbine over the whole annular combustion chambers. For this reason, the hot gas stream has a temperature which can be reliably calculated (e.g. via a simulation software); in other words no colder or hotter areas arise, where the hot gas stream temperature is substantially different (higher or lower) than an average temperature of the hot gas stream.

Gas turbines are driven based on the temperature of the hot gas stream passing through the combustors; for this reason the temperature of the hot gas stream is measured by temperature sensors downstream of the high pressure turbine and the temperature so measured is used to drive the gas turbine, because these temperature measurements can directly provide a correct representation of the average temperature of the hot gas stream.

Different gas turbines have a configuration with a first combustor and a second combustor with a diluter mixer, through which air is introduced into the hot gas, in-between. These combustors may have a can configuration, such that the first combustor, the diluter mixer and the second combustor are all housed in a tubular housing.

In order to drive the gas turbine, also in these embodiments measurements of the hot gas stream temperature are required, but because of the can configuration, which prevents interaction of the hot gas stream of different cans, and the lack of the high pressure turbine shuffling the hot gas stream, the temperature distribution over the combustors can vary according to the operating conditions.

In such a situation temperature measurements could provide results that are not representative of the actual average temperature of the hot gas stream; e.g. one temperature measurement can provide a correct hot gas stream average temperature in one operating condition, but at a different operating condition, with a different temperature distribution, the measured temperatures could be not representative of the average temperature of the hot gas stream anymore. Driving the gas turbine based on these temperature measurements is thus not possible.

Further types of gas turbine may have a combustion chamber without a second combustion chamber fed with the hot gas stream generated in the first combustion chamber. Difficulties in measurements of the temperature of the hot gas stream generated in the combustion chamber may arise anyway, e.g. because of the way the fuel is supplied into the combustion chamber, which in general changes according to the operating conditions. E.g. the temperature distribution over the hot gas stream may depend on the supply of pilot fuel (i.e. rich fuel to sustain the flame) or staging (i.e. supply of fuel from different injection locations that are differently driven from one another) or grouping (i.e. the nozzles or burners are not driven all the same way, but a group of nozzles or burners is driven to supply fuel in accordance to a schedule and another group to a different schedule, which may also be no supply of fuel at all).

The provision of a large number of temperature sensors, in order to have a complete picture of the temperature distribution of the hot gas stream independently from the operating condition is technically difficult and expensive and should be avoided.

US 2006/0096292 A1 teaches a method for determining a temperature, mass-averaged over a flow cross-section, of a gas flow in a gas turbine at partial load operation. One or more sensors are used to detect a temperature value in the gas flow in the area of the flow cross-section and a correction value is applied to compensate for nonuniformities in the temperature profile of the gas flow across the flow cross-section as a function of parameters specific of the operating point. A control apparatus is also provided.

Another example of a method for controlling the operation of a gas turbine is disclosed in EP 3 061 944 A1.

SUMMARY

An aspect of the invention includes providing a method for manufacturing a controller and a combustion system, in which a hot gas stream average temperature can be reliably detected, independently from the particular operating conditions.

In addition, the number of temperature sensors used for locally measuring the temperature of the hot gas stream can be limited and also kept to a minimum.

Advantageously, even if a complete picture of the temperature distribution over the hot gas stream is not achieved, the required average temperature is reliably obtained and in addition specific areas, which can be opportunely selected according to the requirements such as controlling hot or cold spots, can also be monitored.

These and further aspects are attained by providing a method and a combustion system in accordance with the accompanying claims.

BRIEF DESCRIPTION OF THE DRAWINGS

Further characteristics and advantages will be more apparent from the description of a preferred but non-exclusive embodiment of the method and combustion system, illustrated by way of non-limiting example in the accompanying drawings, in which:

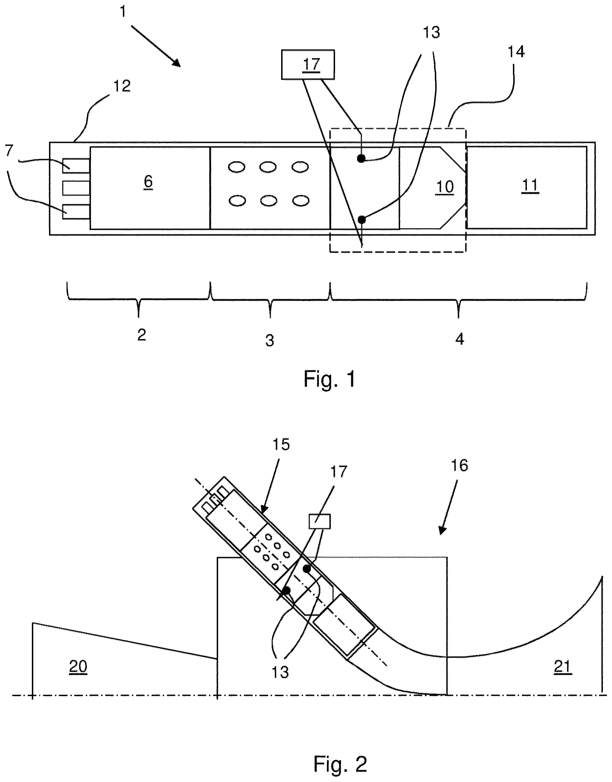

Figure 1 shows a combustion system test rig for implementing the method;
Figure 2 shows a gas turbine with the combustion system of the invention;
Figures 3 and 4 show respectively the burners connected to the first combustion chamber and a cross section of the combustion system test rig.

DETAILED DESCRIPTION OF EXEMPLARY EMBODIMENTS

With reference to the figures, these show a combustion system test rig 1. The combustion system test rig reproduces (i.e. it is equal to) a combustion system 15 which is part of or is going to be assembled on a gas turbine 16. In the following specific reference to a combustion system and to a combustion system test rig with sequential combustion is made, with combustion chambers where premixed combustion occurs, it is anyhow clear that the same concepts are applicable for different types of combustion systems, e.g. without sequential combustion and with premixed or diffusion combustion.

The combustion system test rig 1 has a first combustor 2, a dilution mixer 3 and a second combustor 4.

The first combustor 2 is of pre-mixed type (i.e. it is arranged for generating a premixed flame) and has a combustion chamber 6 with at least two burners 7 for supplying a mixture of a fuel and an oxidizer thereinto. In the example shown, the first combustor 2 has four burners 7, operatively grouped in a first group 8 of three burners 7 operating in the same conditions and a second group 9 of one burner; the burners 7 of the first group 8 and second group 9 may or may not operate in the same conditions, but the burners 7 of each group operate in the same conditions.

The dilution mixer 3 is fluidically connected downstream of the first combustor 2 and is arranged for supplying diluting air into the hot gas stream.

The second combustor 4 is fluidically connected downstream of the dilution mixer 3 and is arranged for supplying additional fuel into the hot gas stream and combusting it with the oxidizer still present in the hot gas stream.

The second combustor 4 has a mixing section 10 and a second combustion chamber 11 and it is also of premixed type (i.e. it is arranged to carry out a premixed combustion of the fuel) and lighting of the mixture of fuel and oxidizer occurs by auto ignition.

The first combustor 2, the dilution mixer 3 and the second combustor 4 have a can configuration and are housed in a tubular housing 12.

During operation, fuel and oxidizer, typically air, are supplied into the burners 7 and mixed therein. The resulting mixture is then fed into the combustion chamber 6 and is combusted there, generating a hot gas stream that is then directed into the dilution mixer 3.

When passing through the dilution mixer 3, dilution air is supplied into the hot gas stream.

Then, the hot gas stream passes through the second combustor 4, where additional fuel is injected, e.g. via elongated lances 25 provided across the section of the mixing section 10; this fuel is mixed in the hot gas stream in the mixing section 10 and is then combusted in the combustion chamber 11.

In order to measure the hot gas stream temperature, temperature sensors 13, such as thermocouples, are provided. In particular, at least two temperature sensors 13 for detecting a local temperature of the hot gas stream are provided. The at least two temperature sensors 13 are located at an area 14 between the first combustor 2 or preferably the dilution mixer 3 and the second combustion chamber 11.

Advantageously, the axial distance among the temperature sensors is short and preferably the temperature sensors are at the same axial position, where the axial position is ascertained with reference to a longitudinal axis of the combustion system, i.e. the axis parallel to the direction of the hot gas stream. In other words, the temperature sensors substantially lie in one plane which is perpendicular to the longitudinal axis of the combustion system.

The relevant temperature that has to be measured is the mixer exit temperature MET, i.e. the temperature theoretically achieved by burning the fuel supplied into the test combustion rig with the oxidizer supplied into the test combustion rig at the area 14 downstream of the first combustor 2 (in the present case downstream of the mixer 3) and upstream of the combustion chamber 11; this is an average temperature of the hot gas stream that cannot be directly measured, because of the varying temperature distribution over the combustor with varying of the combustor operating parameters.

Therefore, according to the method, the combustion system test rig 1 is operated with different operating parameter sets and the local temperature of the hot gas stream is measured with the at least two temperature sensors 13, obtaining local temperatures-operating parameter sets.

Afterward, for each operating parameter set, based on the supplied oxidizer and fuel mass flow, the theoretical mixer exit temperature MET is calculated (i.e. the heat balance is calculated).

Thus, a correlation between the local temperatures and the theoretical mixer exit temperature MET is provided and the controller is programmed with the correlation, so that based on local temperature measurements the controller can calculate the theoretical mixer exit temperature MET.

Different possibilities exist for the definition of the operating parameters, but preferably the different operating parameters comprise at least different fuel distribution among the burner groups 8, 9 of the first combustor 2 and/or different fuel distribution between the first combustor and the second combustor 2, 4 and/or different oxidizer mass flow supply and/or pilot fuel supply.

The correlation is advantageously a polynomial expression, such as

$$\text{MET} = a1 \cdot T1 + a2 \cdot T2 + a3 \cdot T3 + \ldots\ldots + an \cdot Tn + b$$

wherein:

T1, T2, ... Tn: are the local temperatures measured by the temperature sensors,
a1, a2, a3, ......, an, b: are coefficients that match the measured values with the mixer exit temperature MET.

In a preferred embodiment, the polynomial expression is

$$\text{MET} = a1 \cdot T1 + a2 \cdot T2 + b$$

and only two temperature sensors are provided; this renders the hardware of the combustion system test rig 1 and combustion system of the gas turbine simpler and less expensive and likewise data collection and handling is easy and less expensive.

The controller manufactured according to the described method can be used together with a sequential combustion system 15, in order to reliably calculate the mixer exit temperature MET.

The combustion system 15 has a first combustor 2, a dilution mixer 3 and a second combustor 4 in a can configuration. The combustion system is equal to the combustion system test rig 1, it is therefore not described in detail in the following; in the attached figures same reference numbers as for the combustion system test rig are used.

In particular, the combustion system 15 comprises a controller 17 manufactured according to the described method and two or more (but preferably two) temperature sensors 13 such as thermocouples, for locally measuring the hot gas stream temperature at an area 14 between the dilution mixer 3 and the second combustion chamber 11 (in this case reference to the dilution mixer is made, but generally the reference can be the first combustion chamber 6, e.g. if no dilution mixer is provided). The temperature sensors 13 are positioned at the same position where temperature sensors of the combustion system test rig 1 were positioned, when the method for manufacturing the controller was implemented.

The controller 17 is connected to the temperature sensors 13, such that during operation the temperature sensors 13 detect local temperatures of the hot gas stream and communicate them to the controller 17, the controller 17 based on these measured local temperatures and by means of the correlation, such as the polynomial expression, calculates the mixer exit temperature MET. A control unit of the gas turbine, on the basis of the mixer exit temperature MET, drives the gas turbine.

In different embodiments, the controller 17 can be a dedicated circuitry, a separate computer or can be implemented via the circuitry of the gas turbine control unit.

In the following an embodiment of the method is described according to which not only the correlation, but also the position for the temperature sensors 13 is determined.

In this embodiment, at least three local temperatures are measured and then subsets of local temperatures are selected and a plurality of correlation between the local temperatures of each of the selected subset and the theoretical mixer exit temperature MET is provided.

Thus a subsets of local temperatures is selected; the selection can be based on the accuracy of the correlation, i.e. the correlation that better represents the mixer exit temperature can be selected; this best representation can be pursued over a defined temperature range or for all available data. In addition, the selection can be based on the need of providing a temperature sensor in a given position, such that the temperature at that position is measured, in order e.g. to control the local temperature where hot spots could result during the operation of the gas turbine.

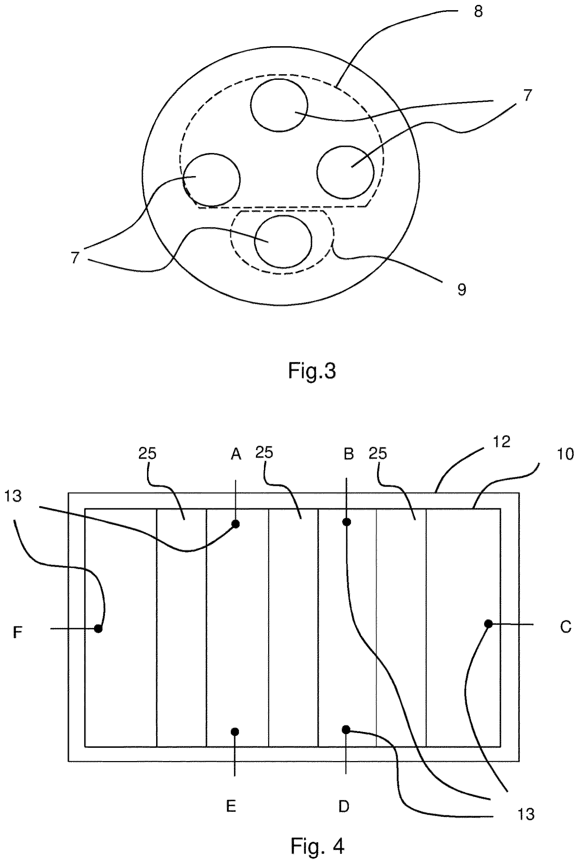

For example, with reference to figure 4 that shows a combustion system test rig cross section, six local temperatures are measured, then subset of temperatures from two temperature sensors are obtained and the couple of temperature sensors providing the most accurate mixer exit temperature for different operating conditions is selected, such as temperature sensors A and C.

The controller is thus programmed with the correlation based on the selected subset of local temperatures from the selected temperature sensors.

It is clear that the figure 4 shows only one possible example for the cross section of the combustion system test rig and also other cross sections are possible, such as round or square or others too.

The number of temperature sensors 13 provided on the combustion system test grid 1 can vary according to the size and shape of the combustor. For example, in case of a combustor system test rig 1 with three or four or even six (for larger combustors) temperature sensors, a subset of two temperatures can be selected.

Once the local temperature subset has been selected, the temperature sensors 13 which have detected these local temperatures and their position on the combustion system test rig 1 is defined. The combustor system 15 is then preferably only provided with temperature sensors 13 at positions where the local temperatures of the selected subset were measured in the combustion system test rig 1, because the correlation is based only on local temperature measurements made there and can reliably calculate the mixer exit temperature based on local temperatures measured there. Therefore, with reference to figure 4, the combustion system is only provided with the temperature sensors A and B.

When the combustion system 15 is assembled in a gas turbine 16 and is operated, it is fed with compressed air from a compressor 20 and fuel. The combustion of the fuel in the compressed air generates the hot gas stream that is then fed to a turbine 21.

The temperature sensors 13 measure the local temperature of the hot gas stream and send this information to the controller 17 that calculates the mixer exit temperature MET of the hot gas stream. The mixer exit temperature MET of the hot gas stream is thus sent to the control unit of the gas turbine, for driving the gas turbine.

Naturally the features described may be independently provided from one another.

In practice the materials used and the dimensions can be chosen at will according to requirements and to the state of the art.

**Claims**

1. A method for manufacturing a controller (17) for calculating a mixer exit temperature (MET) of a hot gas stream generated in a combustion system (15), the method comprising:

   - providing a combustion system test rig (1),
   - providing at least two temperature sensors (13) for locally detecting a temperature of a hot gas stream generated in the combustion system test rig (1);

   the method comprising:

   - operating the combustion system test rig (1) with different operating parameter sets,
   - measuring the local temperature of the hot gas stream with the at least two temperature sensors (13), obtaining local temperatures-operating parameter sets,
   - for each operating parameter set calculating, based on the supplied oxidizer and fuel mass flow, a theoretical mixer exit temperature (MET), being the temperature theoretically achieved by burning the fuel supplied into the test combustion rig with the oxidizer supplied into the test combustion rig,
   - providing a correlation between the local temperatures and the theoretical mixer exit temperature (MET),
   - providing the controller (17) and programming the controller (17) with the correlation, so that based on local temperature measurements the controller can calculate the mixer exit temperature (MET).

2. The method of claim 1, **characterised in that** the different operating parameters comprise at least different fuel distribution among the burners (7) of the first combustor (2) and/or different fuel distribution between the first combustor (2) and the second combustor (4) and/or different oxidizer mass flow supply and/or pilot fuel supply.

3. The method of claim 1 or 2, **characterised in that** the correlation is a polynomial expression.

4. The method of claim 3, **characterized in that** the polynomial expression is

$$MET = a_1 \cdot T_1 + a_2 \cdot T_2 + a_3 \cdot T_3 + \ldots + a_n \cdot T_n + b$$

wherein:

T1, T2, ... Tn: are the local temperatures measured by the temperature sensors (13),
a1, a2, a3, ......, an, b: are coefficient that match the measured values with the mixer exit temperature (MET).

5. The method of claim 4, **characterized in that** the polynomial expression is

$$MET = a_1 \cdot T_1 + a_2 \cdot T_2 + b.$$

6. The method of any of claims 1 through 5, **characterized by**

measuring at least three local temperatures, then selecting subsets of local temperatures, thus selecting the subsets of local temperatures which provides the most accurate mixer exit temperature (MET) correlation, then programming the controller (17) with the correlation based on the selected subset of local temperatures.

7. The method of claims 4 and 6 or 5 and 6, **characterized by** calculating the coefficients of the polynomial expression only based on the selected subset of local temperatures.

8. The method of any of claims 1 through 7, **characterized in that** the combustion system test rig (1) has:

- a first combustor (2) with at least two burners (7) connected to a first combustion chamber (6), the at least two burners (7) being arranged for supplying a mixture of a fuel and an oxidizer in the first combustion chamber (6), the first combustion chamber (6) being arranged to burn the mixture generating the hot gas stream,
- a dilution mixer (3) fluidically connected downstream of the first combustor (2), the dilution mixer (3) for supplying diluting air in the hot gas stream,
- a second combustor (4) is fluidically connected downstream of the dilution mixer (3), the second combustor (4) having a mixing area (10) and a second combustion chamber (11) and being arranged for supplying fuel into the hot gas stream and combusting it with oxidizer present in the hot gas stream,
- the at least two temperature sensors (13) being located at an area (14) between the dilution mixer (3) and the second combustion chamber (11).

9. The method of claim 8, **characterized in that** the first combustor (2), the dilution mixer (3) and the second combustor (4) have a can configuration.

10. The method of any of claims 1 through 9, **characterized in that** the temperature sensors are substantially at a same axial position, where the axial position is ascertained with reference to a longitudinal axis of the combustion system, i.e. the axis parallel to the direction of flow of the hot gas stream.

11. A combustion system (15) comprising

- a first combustor (2) for generating a hot gas stream,
- a controller (17) manufactured according to the method defined in any of claims 1-10, which method comprises a combustion system test rig (1) and at least two temperature sensors (13) for locally detecting a temperature of a hot gas stream generated in the combustion system test rig (1),

wherein the combustion system is equal to the combustion system test rig (1),

- at least two temperature sensors (17) for the hot gas stream,
- the at least two temperature sensors being positioned at position of the combustor system where temperature sensors were positioned on the combustion system test rig (1),
- the controller (17) being connected to the at least two temperature sensors (13).

12. The combustion system of claim 11, **characterized by** comprising

- a first combustor (2) with at least two burners (7) connected to a first combustion chamber (6), the at least two burners (7) being arranged for supplying a mixture of a fuel and an oxidizer in the first combustion chamber (6), the first combustion chamber (6) being arranged to burn the mixture generating the hot gas stream,
- a dilution mixer (3) fluidically connected downstream of the first combustor (2), the dilution mixer (3) for supplying diluting air in the hot gas stream,
- a second combustor (4) fluidically connected downstream of the dilution mixer (3), the second combustor (4) having a mixing area (10) and a second combustion chamber (11) and being arranged for supplying fuel into the hot gas stream and combusting it with oxidizer present in the hot gas stream.

13. The combustion system of any of claims 11 through 12, **characterized in that** the first combustor (2), the dilution mixer (3) and the second combustor (4) have a can configuration.

14. The combustion system of any of claims 11 through 13, **characterized in that** the temperature sensors are substantially at the same axial position, where the axial position is ascertained with reference to a longitudinal axis of the combustion system, i.e. the axis parallel to the direction of flow of the hot gas.


**Patentansprüche**

1. Verfahren zur Herstellung einer Steuerung (17) zum Berechnen einer Mischeraustrittstemperatur (Mixer Exit Temperature - MET) eines Heißgasstroms, der in einem Verbrennungssystem (15) erzeugt wird, wobei das Verfahren umfasst:

- Bereitstellen eines Verbrennungssystem-Prüfstands (1),
- Bereitstellen mindestens zweier Temperatursensoren (13) zum lokalen Feststellen einer Temperatur eines Heißgasstroms, der in dem Verbrennungssystem-Prüfstand (1) erzeugt wird;

wobei das Verfahren umfasst:

- Betreiben des Verbrennungssystem-Prüfstands (1) mit unterschiedlichen Betriebsparametermengen,
- Messen der lokalen Temperatur des Heißgasstroms mit den mindestens zwei Temperatursensoren (13), Erhalten von Lokale-Temperaturen-Betriebsparametermengen,
- für jede Betriebsparametermenge, Berechnen, basierend auf der zugeführten Sauerstoffträger- und Brennstoff-Massenströmung, einer theoretischen Mischeraustrittstemperatur (MET), welche die Temperatur ist, die theoretisch durch Brennen des in den Prüfverbrennungsstand zugeführten Brennstoffs mit dem in den Prüfverbrennungsstand zugeführten Sauerstoffträger erreicht wird,
- Bereitstellen einer Korrelation zwischen den lokalen Temperaturen und der theoretischen Mischeraustrittstemperatur (MET),
- Bereitstellen der Steuerung (17) und Programmieren der Steuerung (17) mit der Korrelation, derart dass die Steuerung die Mischeraustrittstemperatur (MET) basierend auf lokalen Temperaturmessungen berechnen kann.

2. Verfahren nach Anspruch 1, **dadurch gekennzeichnet, dass** die unterschiedlichen Betriebsparameter mindestens unterschiedliche Brennstoffverteilung unter den Brennern (7) des ersten Verbrenners (2) und/oder unterschiedliche Brennstoffverteilung zwischen dem ersten Verbrenner (2) und dem zweiten Verbrenner (4) und/oder unterschiedliche Sauerstoffträger-Massenströmungszufuhr und/oder Pilotbrennstoffzufuhr umfassen.

3. Verfahren nach Anspruch 1 oder 2, **dadurch gekennzeichnet, dass** die Korrelation ein polynomialer Ausdruck ist.

4. Verfahren nach Anspruch 3, **dadurch gekennzeichnet, dass** der polynomiale Ausdruck ist:

$$MET = a1 \cdot T1 + a2 \cdot T2 + a3 \cdot T3 + \ldots\ldots + an \cdot Tn + b$$

wobei:

T1, T2, ... Tn: die von den Temperatursensoren (13) gemessenen lokalen Temperaturen sind,
a1, a2, a3, ......, an, b: Koeffizienten sind, welche die gemessenen Werte mit der Mischeraustrittstemperatur (MET) abstimmen.

5. Verfahren nach Anspruch 4, **dadurch gekennzeichnet, dass** der polynomiale Ausdruck ist:

$$MET = a1 \cdot T1 + a2 \cdot T2 + b.$$

6. Verfahren nach einem der Ansprüche 1 bis 5, **gekennzeichnet durch**:

Messen von mindestens drei lokalen Temperaturen, dann Auswählen von Teilmengen lokaler Temperaturen, somit
Auswählen der Teilmengen lokaler Temperaturen, welche die genaueste Mischeraustrittstemperatur(MET)-Korrelation bereitstellt, dann
Programmieren der Steuerung (17) mit der Korrelation basierend auf der ausgewählten Teilmenge lokaler Temperaturen.

7. Verfahren nach Anspruch 4 und 6 oder 5 und 6, **gekennzeichnet durch** Berechnen der Koeffizienten des polynomialen Ausdrucks lediglich basierend auf der ausgewählten Teilmenge lokaler Temperaturen.

8. Verfahren nach einem der Ansprüche 1 bis 7, **dadurch gekennzeichnet, dass** der Verbrennungssystem-Prüfstand (1) aufweist:

- einen ersten Verbrenner (2) mit mindestens zwei Brennern (7), die mit einer ersten Verbrennungskammer (6) verbunden sind, wobei die mindestens zwei Brenner (7) zum Zuführen eines Gemischs aus einem Brennstoff und einem Sauerstoffträger in der ersten Verbrennungskammer (6) eingerichtet sind, wobei die erste Verbrennungskammer (6) eingerichtet ist, um das Gemisch zu brennen, das den Heißgasstrom erzeugt,
- einen Verdünnungsmischer (3), der stromabwärts des ersten Verbrenners (2) fluidisch verbunden ist, der Verdünnungsmischer (3) zum Zuführen verdünnender Luft in den Heißgasstrom,
- ein zweiter Verbrenner (4) ist stromabwärts des Verdünnungsmischers (3) fluidisch verbunden, wobei der zweite Verbrenner (4) einen Mischungsbereich (10) und eine zweite Verbrennungskammer (11) aufweist und zum Zuführen von Brennstoff in den Heißgasstrom und dessen Verbrennen mit in dem Heißgasstrom vorhandenem Sauerstoffträger eingerichtet ist,
- wobei die mindestens zwei Temperatursensoren (13) sich an einem Bereich (14) zwischen dem Verdünnungsmischer (3) und der zweiten Verbrennungskammer (11) befinden.

9. Verfahren nach Anspruch 8 **dadurch gekennzeichnet, dass** der erste Verbrenner (2), der Verdünnungsmischer (3) und der zweite Verbrenner (4) eine Rohrausgestaltung aufweisen.

10. Verfahren nach einem der Ansprüche 1 bis 9, **dadurch gekennzeichnet, dass** die Temperatursensoren sich im Wesentlichen an einer gleichen axialen Position befinden, wo die axiale Position unter Bezugnahme auf eine Längsachse des Verbrennungssystems, d. h. die Achse parallel zur Strömungsrichtung des Heißgasstroms, bestimmt wird.

11. Verbrennungssystem (15), umfassend:

- einen ersten Verbrenner (2) zum Erzeugen eines Heißgasstroms,
- eine nach dem Verfahren nach einem der Ansprüche 1 bis 10 hergestellte Steuerung (17), wobei das Verfahren einen Verbrennungssystem-Prüfstand (1) und mindestens zwei Temperatursensoren (13) zum lokalen Feststellen einer Temperatur eines in dem Verbrennungssystem-Prüfstand (1) erzeugten Heißgasstroms umfasst,

wobei das Verbrennungssystem gleich dem Verbrennungssystem-Prüfstand (1) ist,

- mindestens zwei Temperatursensoren (17) für den Heißgasstrom,
- wobei die mindestens zwei Temperatursensoren an einer Position des Verbrennersystems positioniert sind, wo Temperatursensoren an dem Verbrennungssystem-Prüfstand (1) positioniert waren,
- wobei die Steuerung (17) mit den mindestens zwei Temperatursensoren (13) verbunden ist.

**12.** Verbrennungssystem nach Anspruch 11, **dadurch gekennzeichnet, dass** es umfasst:

- einen ersten Verbrenner (2) mit mindestens zwei Brennern (7), die mit einer ersten Verbrennungskammer (6) verbunden sind, wobei die mindestens zwei Brenner (7) zum Zuführen eines Gemischs aus einem Brennstoff und einem Sauerstoffträger in der ersten Verbrennungskammer (6) eingerichtet sind, wobei die erste Verbrennungskammer (6) eingerichtet ist, um das Gemisch zu brennen, das den Heißgasstrom erzeugt,
- einen Verdünnungsmischer (3), der stromabwärts des ersten Verbrenners (2) fluidisch verbunden ist, der Verdünnungsmischer (3) zum Zuführen verdünnender Luft in den Heißgasstrom,
- einen zweiten Verbrenner (4), der stromabwärts des Verdünnungsmischers (3) fluidisch verbunden ist, wobei der zweite Verbrenner (4) einen Mischungsbereich (10) und eine zweite Verbrennungskammer (11) aufweist und zum Zuführen von Brennstoff in den Heißgasstrom und dessen Verbrennen mit in dem Heißgasstrom vorhandenem Sauerstoffträger eingerichtet ist.

**13.** Verbrennungssystem nach einem der Ansprüche 11 bis 12, **dadurch gekennzeichnet, dass** der erste Verbrenner (2) der Verdünnungsmischer (3) und der zweite Verbrenner (4) eine Rohrausgestaltung aufweisen.

**14.** Verbrennungssystem nach einem der Ansprüche 11 bis 13, **dadurch gekennzeichnet, dass** die Temperatursensoren sich im Wesentlichen an der gleichen axialen Position befinden, wobei die axiale Position unter Bezugnahme auf eine Längsachse des Verbrennungssystems, d. h. die Achse parallel zur Strömungsrichtung des Heißgasstroms, bestimmt wird.

**Revendications**

**1.** Procédé de fabrication d'un contrôleur (17) pour calculer la température de sortie de mélangeur (MET) d'un courant de gaz chaud généré dans un système de combustion (15), le procédé comprenant :

- la fourniture d'un banc d'essai de système de combustion (1),
- la fourniture d'au moins deux capteurs de température (13) pour la détection locale de la température d'un courant de gaz chaux généré dans le banc d'essai de système de combustion (1) ;

le procédé comprenant :

- le fonctionnement du banc d'essai de système de combustion (1) avec différents ensembles de paramètres de fonctionnement différents,
- la mesure de la température locale du courant de gaz chaud avec les au moins deux capteurs de température (13), ce qui donne des ensembles de paramètres de fonctionnement en fonction des températures locales,
- pour chaque ensemble de paramètres de fonctionnement, le calcul, sur la base du débit massique de combustible et d'oxydant introduits, de la température de sortie de mélangeur (MET) théorique, qui est la température théoriquement atteinte par combustion du combustible introduit dans le banc d'essai de combustion avec l'oxydant introduit dans le banc d'essai de combustion,
- la fourniture d'une corrélation entre les températures locales et la température de sortie de mélangeur (MET) théorique,
- la fourniture du contrôleur (17) et la programmation du contrôleur (17) avec la corrélation, de façon que, sur la base des mesures de températures locales, le contrôleur puisse calculer la température de sortie de mélangeur (MET).

**2.** Procédé selon la revendication 1, **caractérisé en ce que** les différents paramètres de fonctionnement comprennent au moins une distribution de combustible différente parmi les brûleurs (7) du premier foyer de combustion (2) et/ou une distribution différente de combustible entre le premier foyer de combustion (2) et le deuxième foyer de combustion (4) et/ou un débit massique d'oxydant et/ou un apport de combustible pilote différent.

**3.** Procédé selon la revendication 1 ou 2, **caractérisé en ce que** la corrélation est une expression polynomiale.

**4.** Procédé selon la revendication 3, **caractérisé en ce que** l'expression polynominale est

$$MET = a1 \cdot T1 + a2 \cdot T2 + a3 \cdot T3 + ... + an \cdot Tn + b$$

dans laquelle :

T1, T2, ... Tn : sont les températures locales mesurées par les capteurs de température (13),
a1, a2, a3, ..., an, b : sont des coefficients qui correspondent aux valeurs mesurées avec la température de sortie de mélangeur (MET).

**5.** Procédé selon la revendication 4, **caractérisé en ce que** l'expression polynominale est

$$MET = a1 \cdot T1 + a2 \cdot T2 + b.$$

**6.** Procédé selon l'une quelconque des revendications 1 à 5,
**caractérisé par**

la mesure d'au moins trois températures locales, puis
la sélection de sous-ensembles de températures locales, et ainsi
la sélection des sous-ensembles de températures locales procurant la corrélation la plus précise de température de sortie de mélangeur (MET), puis
la programmation du contrôleur (17) avec la corrélation sur la base du sous-ensemble sélectionné de températures locales.

**7.** Procédé selon les revendications 4 et 6 ou 5 et 6, **caractérisé par** le calcul des coefficients de l'expression polynomiale uniquement sur la base du sous-ensemble sélectionné de températures locales.

**8.** Procédé selon l'une quelconque des revendications 1 à 7, **caractérisé en ce que** le banc d'essai de système de combustion (1) a :

- un premier foyer de combustion (2) avec au moins deux brûleurs (7) connectés à une première chambre de combustion (6), les au moins deux brûleurs (7) étant disposés pour délivrer un mélange d'un combustible et d'un oxydant dans la première chambre de combustion (6), la première chambre de combustion (6) étant disposée pour brûler le mélange générant le courant de gaz chaud,
- un mélangeur par dilution (3) connecté de manière fluidique en aval du premier foyer de combustion (2), le mélangeur par dilution (3) servant à délivrer de l'air de dilution dans le courant de gaz chaud,
- un deuxième foyer de combustion (4) connecté de manière fluidique en aval du mélangeur par dilution (3), le deuxième foyer de combustion (4) ayant une zone de mélange (10) et une deuxième chambre de combustion (11) et étant disposé pour délivrer du combustible dans le courant de gaz chaud et le brûler avec l'oxydant présent dans le courant de gaz chaud,
- les au moins deux capteurs de température (13) étant situés au niveau d'une zone (14) entre le mélangeur par dilution (3) et la deuxième chambre de combustion (11).

**9.** Procédé selon la revendication 8, **caractérisé en ce que** le premier foyer de combustion (2), le mélangeur par dilution (3) et le deuxième foyer de combustion (4) ont une configuration tubulaire.

**10.** Procédé selon l'une quelconque des revendications 1 à 9, **caractérisé en ce que** les capteurs de température sont pratiquement à la même position axiale, où la position axiale est déterminée en référence à un axe longitudinal du système de combustion, c'est-à-dire l'axe parallèle à la direction d'écoulement du courant de gaz chaud.

**11.** Système de combustion (15) comprenant

- un premier foyer de combustion (2) pour générer un courant de gaz chaud,
- un contrôleur (17) fabriqué conformément au procédé défini dans l'une quelconque des revendications 1 à 10, lequel procédé comprend un banc d'essai de système de combustion (1) et au moins deux capteurs de température (13) pour la détection locale de la température d'un courant de gaz chaux généré dans le banc d'essai de système de combustion (1),

dans lequel le système de combustion est identique au banc d'essai de système de combustion (1),

- au moins deux capteurs de température (17) pour le courant de gaz chaud,
- les au moins deux capteurs de température étant positionnés à la position du système de foyer de combustion où les capteurs de température étaient positionnés sur le banc d'essai de système de combustion (1),
- le contrôleur (17) étant connecté aux au moins deux capteurs de température (13).

12. Système de combustion selon la revendication 11, **caractérisé en ce qu'**il comprend

- un premier foyer de combustion (2) avec au moins deux brûleurs (7) connectés à une première chambre de combustion (6), les au moins deux brûleurs (7) étant disposés pour délivrer un mélange d'un combustible et d'un oxydant dans la première chambre de combustion (6), la première chambre de combustion (6) étant disposée pour brûler le mélange générant le courant de gaz chaud,
- un mélangeur par dilution (3) connecté de manière fluidique en aval du premier foyer de combustion (2), le mélangeur par dilution (3) servant à délivrer de l'air de dilution dans le courant de gaz chaud,
- un deuxième foyer de combustion (4) connecté de manière fluidique en aval du mélangeur par dilution (3), le deuxième foyer de combustion (4) ayant une zone de mélange (10) et une deuxième chambre de combustion (11) et étant disposé pour délivrer du combustible dans le courant de gaz chaud et le brûler avec l'oxydant présent dans le courant de gaz chaud.

13. Système de combustion selon l'une quelconque des revendications 11 et 12, **caractérisé en ce que** le premier foyer de combustion (2), le mélangeur par dilution (3) et le deuxième foyer de combustion (4) ont une configuration tubulaire.

14. Système de combustion selon l'une quelconque des revendications 11 à 13, **caractérisé en ce que** les capteurs de température sont pratiquement à la même position axiale, où la position axiale est déterminée en référence à un axe longitudinal du système de combustion, c'est-à-dire l'axe parallèle à la direction d'écoulement du courant de gaz chaud.

Fig. 1

Fig. 2

Fig.3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060096292 A1
- EP 3061944 A1